# EUROPÄISCHE PATENTANMELDUNG

(11) **EP 0 824 161 A2**
(43) Veröffentlichungstag der Anmeldung: **18.02.1998**
(21) Anmeldenummer: 97890129.6
(22) Anmeldetag: 08.07.1997
(51) Int. Cl.: D21H 17/72, D21H 17/29, D21H 19/54, C08B 35/00

(54) **Stärke und Stärkederivate für die Papierindustrie**

(30) Priorität: 12.08.1996 AT 1444/96; 18.02.1997 AT 270/97
(71) Anmelder: SÜDZUCKER AKTIENGESELLSCHAFT MANNHEIM/OCHSENFURT, D-68165 Mannheim (DE)
(72) Erfinder: Grüll, Dietmar, Dipl.Ing.Dr., 3442 Langenschönbichl (AT); Kubadinow, Nikolai, Dr., 1130 Wien (AT); Wastyn, Marnik-Michel, Dr., 2320 Schwechat (AT)
(74) Vertreter: Atzwanger, Richard, Dipl.-Ing. Patentanwalt

(57) **Zusammenfassung**

Für die Verwendung in der Papierindustrie sind neue Leimungsmittelzusammensetzungen, neue Mittel zur Oberflächenleimung, neue Beschichtungsmittel sowie neue Zusatzmittel für Papierstoff, alle aufBasis von Stärke bzw. mit Stärkezusatz, geoffenbart.

Die neuen Mittel enthalten je nach Einsatzgebiet vor allem kationisierte und hydroxyalkylierte bzw. alkylveresterte Stärke, vorzugsweise auf Basis von Amylopektinstärke, mit einem Kationisierungsgrad von 0,005 bis 0,4 und einem Hydroxyalkylierungsgrad bzw. Alkylveresterungsgrad von 0,005 bis 0,75. Besonders bevorzugt sind kationisierte propoxylierte Stärken.

Amylopektin-Kartoffelstärke kann günstigerweise auch in nur einfach derivatisierter oder in amphoterer Form eingesetzt werden. Bestimmte Derivate der Amylopektinstärke, insbesondere der Amylopektin-Kartoffelstärke, stellen neue Substanzen dar.

## Beschreibung

Stärke und Stärkederivate werden in der Papierindustrie in mehreren Einsatzgebieten, so z.B. als Dispergiermittel und Emulgiermittel für hydrophobe cellulosereaktive Leimungsmittel, als Trockenfestigkeitsmittel und Retentionsmittel bei der Papierherstellung, zur Oberflächenbeschichtung, als Binder in Streichfarben etc. verwendet.

Unter Papier sollen im vorliegenden Fall alle Standardpapiere und Spezialpapiere ebenso wie Karton, Pappe und ähnliche Produkte verstanden werden.

Als Stärke-Rohstoff wird z.B. Maisstärke, Weizenstärke, Kartoffelstärke, Tapiokastärke, Maniokstärke, Erbsenstärke, Reisstärke, Roggenstärke, Gerstenstärke etc. verwendet.

Trotz des umfangreichen Standes der Technik auf diesen Gebieten wird ständig nach weiteren Stärkeprodukten gesucht, um Verbesserungen in der Verfahrensführung sowie in den erhaltenen Papierprodukten zu erzielen.

Gegenstand der vorliegenden Erfindung sind in erster Linie Leimungsmittelzusammensetzungen für Papier, weiters Mittel zur Oberflächenleimung von Papier, Beschichtungsmittel für Papier, Zusatzmittel für Papierstoff bei der Papierherstellung sowie neue Stärkederivate, die in diesen Mitteln und bei der Herstellung von Papier und Papierprodukten allgemein besonders vorteilhaft verwendbar sind.

Als Auswahl aus der Literatur auf diesem Gebiet werden folgende Veröffentlichungen genannt:

Die EP-A2 0 369 328 (Hercules) beschreibt stabilisierte Papierleimungsmittel auf der Basis von wässerigen Alkylketendimer-Dispersionen, in denen eine wasserlösliche kationisierte Stärke sowie Ligninsulfonat, Aluminiumsulfat und eine Dicarbonsäure enthalten sind. Die kationisierte Stärke enthält ausreichend kationische Aminogruppen, um eine positive Ladung der Stärke in der Lösung zu bewirken. Als bevorzugte kationisierte Stärke ist die kationisierte Wachsmaisstärke angegeben.

In der DE 39 20 356 Al (Grace) ist eine Leimungsmittelzusammensetzung beschrieben, in welcher kationisierte Amylopektinstärke als Dispergiermittel für die cellulosereaktiven chemischen Leimungsmittel vorgeschlagen wird. Als Leimungsmittel sind neben den Ketendimeren offene oder zyklische Säureanhydride und Isocyanate genannt.

Diese beiden Veröffentlichungen wurden im Jahr 1988 hinterlegt, wo Amylopektinstärke praktisch ausschließlich aus Wachsmaisstärke bestand. Die chemische Fraktionierung von Amylose und Amylopektin stellt ein äußerst aufwendiges und kostenintensives Verfahren dar, das für technische Produkte kaum eine wirtschaftliche Bedeutung hat.

Die US-PS 5 399 193 (Cerestar) betrifft Stärke-Zusammensetzungen, die als Bindemittel für Oberflächenbeschichtungen (Streichmassen) verwendbar sind. Diese Bindemittel beruhen entweder auf kationisierten Stärken und/oder kationischen synthetischen Polymeren, die mit einer durch mindestens einen nichtionischen Substituenten substituierten Stärke gemischt sind, oder auf einer kationisierten Stärke, die selbst mindestens einen nichtionischen Substituenten enthält. Als Ausgangsstärken bei der Kationisierung sind mehr oder weniger alle zum Prioritätszeitpunkt (Jänner 1993) bekannten Stärken angegeben, wobei jedoch kein Hinweis auf eine eventuelle Bedeutung des Amylosegehalts in dieser Literaturstelle zu finden ist.

Für die Masseleimung von Papier wird in der EP-A1 0 703 314 (AVEBE) vorgeschlagen, Amylopektin-Kartoffelstärke in kationisierter Form zu verwenden. Priorität dieser Anmeldung ist 1994, wo es bereits die ersten Versuche mit der Stärke von durch Mutation oder durch Gentechnik veränderten Kartoffeln gab, nämlich Kartoffeln, deren Stärke fast ausschließlich aus Amylopektin besteht. Da die diesbezüglichen Untersuchungen damals noch sehr wenig weit fortgeschritten waren, wurde in der Beschreibung dieser Patentanmeldung nur vage davon gesprochen, auch chemisch und/oder enzymatisch veränderte Stärke bei der Papiermasseleimung zu verwenden. Die enzymatische Veränderung dient zur Verringerung des Molekulargewichts und es ist anzunehmen, daß es sich bei der chemischen Veränderung auch um Modifikationen in dieser Richtung handelt.

Die EP-A1 737 777 (AVEBE) betrifft die Oberflächenleimung von Papier mit abgebauter Amylopektin-Kartoffelstärke. Es wird oxidativer Abbau, Säureabbau und enzymatischer Abbau zur Herabsetzung des Molekulargewichts empfohlen. Ganz allgemein wird auch von einer Modifikation durch Veresterung oder Veretherung der Stärke gesprochen, jedoch wird keine nähere Angabe hiezu gemacht.

Gegenstand der EP-A1-0 742 316 ist eine Leimungsmittelzusammensetzung für Papier und Pappe, die als Bindemittel ein kationisches, mit einem Dicarbonsäureanhydrid verestertes Polysaccharid enthält, wobei das Dicarbonsäureanhydrid durch eine verzweigte Kohlenstoffkette substituiert ist.

In der EP-A2 0 743 394 (National Starch) ist eine Papierleimungszusammensetzung beschrieben, die als chemisches Leimungsmittel ein zyklisches Dicarbonsäureanhydrid mit hydrophober Substitution und als Dispergiermittel eine kationisierte nicht-abgebaute Stärke enthält, die mit Ether- oder Estergruppen bis zu einem DS (Degree of Substitution) von 0,005 bis 0,4 modifiziert ist. Die Ethergruppen umfassen auch Hydroxyalkylgruppen mit 1 bis 4 Kohlenstoffatomen. Ausdrücklich wird in der Beschreibung erwähnt, daß unter Stärke hier normale (amylosehaltige) Stärke verstanden wird, wobei sogar eine Stärke mit mindestens 5 % Amylose, insbesondere mit bis zu 45 % Amylose, als bevorzugt verwendbar genannt ist.

Schließlich betrifft die PCT-Anmeldung WO 96/31650 (BASF) Papierleimungsmittelzusammensetzungen aus A) speziellen Alkyldiketenen, die mit kationisierter Amylopektin-Stärke dispergiert sind, und B) feinteiligen wässerigen Polymerdispersionen, die ein Leimungsmittel für Papier sind. Es wird diese Leimungsmittelzusammensetzung sowohl für die Masse- als auch für die Oberflächenleimung in Betracht gezogen. Das Stärke-Ausgangsmaterial wird durch eine Fraktionierung üblicher nativer Stärken oder aus solchen Pflanzen, wie z.B Wachsmais und Wachskartoffel, die durch Züchtungsmaßnahmen praktisch reine Amylopektinstärke produzieren, gewonnen.

Für die Herstellung von bestimmter Papierqualität, wie z.B. Schreibpapier, Druckpapier oder fotographisches Rohpapier, ist es notwendig, die natürlichen flüssigkeitsabsorbierenden Eigenschaften des Papiers zu reduzieren. Diese speziellen Papiereigenschaften werden durch Hydrophobisierung bzw. Leimung des Papiers erreicht. Diese Hydrophobisierung des Papiers kann z.B. dadurch erreicht werden, daß während des Papierherstellungsprozesses dem Papier eine Dispersion oder Emulsion eines hydrophoben Materials zugesetzt wird. Zu den wirkungsvollsten Substanzen zur Hydrophobierung von Papier zählen die sogenannten hydrophoben cellulosereaktiven Leimungsmittel, wie z.B. Alkylketendimere, Alkylbernsteinsäureanhydride und Fettisocyanate. Diese hydrophoben Leimungsmittel sind in Wasser unlöslich und werden daher beim Papierherstellungsverfahren in Form einer Emulsion oder Dispersion eingesetzt. Als Emulgatoren können Tenside verwendet werden, allerdings ergeben Tenside Emulsionen mit schlechter Wirksamkeit und geringer Affinität zur Cellulosefaser. Kationische Polymere, wie z.B. kationische Stärken, ergeben vergleichsweise bessere Emulgiermittel. In hydrophoben Leimungsmittelzusammensetzungen soll das kationische Polymer mehrere Funktionen erfüllen. Zuerst soll es die Emulsion oder Dispersion stabilisieren. Weiters soll es die Retention des Hydrophobierungs- oder Leimungsmittels auf dem Papier erhöhen. Darüber hinaus soll das Emulgiermittel den Leimungsgrad unterstützen.

Überraschenderweise hat sich nun herausgestellt, daß bei hydrophoben Papierleimungsmitteln, die z.B Alkenylbernsteinsäureanhydride, Fettisocyanate und insbesondere Alkylketendimere (AKD) als cellulosereaktive Leimungsmittel enthalten, besonders vorteilhafte Eigenschaften und Ergebnisse erhalten werden, wenn diese Leimungsmittel in Kombination mit speziellen Stärkederivaten vorliegen. Diese Resultate werden noch besser, wenn es sich um die Derivate von Amylopektinstärke handelt. Die besten Erfolge werden mit den Derivaten der Amylopektin-Kartoffelstärke erhalten.

Gegenstand der Erfindung gemäß einem ersten Aspekt derselben sind daher Leimungsmittelzusammensetzungen für Papier, die auf wässeriger Basis formuliert sind und ein Alkylketendimer, bevorzugt ein C6-C30-Alkylketendimer, als cellulosereaktives Leimungsmittel, ein Dispergier- oder Emulgiermittel auf Basis kationisierter Stärke sowie an sich in diesem Zusammenhang übliche Hilfs- und Zusatzmittel enthalten.

Die neuen Leimungsmittelzusammensetzungen sind erfindungsgemäß dadurch gekennzeichnet, daß die verwendete Stärke eine kationisierte und hydroxyalkylierte bzw. alkylveresterte Stärke mit einem Kationisierungsgrad (DS) von 0,005 bis 0,4 und einem Hydroxyalkylierungsgrad bzw. Alkylveresterungsgrad (DS) von 0,005 bis 0,75 ist. Bevorzugt sind Kationisierungsgrade im Bereich von 0,015 bis 0,2, vorzugsweise bis 0,12; insbesondere von 0,035 bis 0,06. Die Hydroxyalkylierungsgrade bzw. Alkylveresterungsgrade liegen bevorzugt im Bereich von 0,015 bis 0,2, insbesondere von 0,02 bis 0,1.

Die Länge der Kohlenstoffketten in den Hydroxyalkyl- bzw. Alkylestergruppen liegt im Bereich von 1 bis 6 Kohlenstoffatomen.

Besonders bevorzugt besteht die Stärke in den neuen Leimungsmittelzusammensetzungen aus einer kationisierten und hydroxyalkylierten bzw. alkylveresterten Amylopektinstärke, vorzugsweise auf Basis von Wachsmais oder Kartoffel, wobei die Stärke günstigerweise aus durch molekularbiologische, insbesondere gentechnische Methoden veränderten Kartoffeln gewonnen wird.

Amylopektinstärke ist eine Stärke, die im Verhältnis zu üblicher Stärke einen deutlich verringerten Amylosegehalt aufweist. Bevorzugt ist es, wenn die Stärke weniger als 20 %, vorzugsweise 0 % bis 8 %, insbesondere 0 bis 3 % Amylose enthält.

Überraschenderweise hat sich herausgestellt, daß es bei Verwendung von Amylopektin-Kartoffelstärke häufig genügt, nur kationisierte Amylopektin-Kartoffelstärke zu verwenden, da diese bereits in vieler Hinsicht ebensogute Ergebnisse liefert, wie die doppelt derivatisierte Standard-Stärke oder Wachsmaisstärke. D.h. daß die Hydroxyalkylierungsgrade bzw. Alkylveresterungsgrade bei Amylopektin-Kartoffelstärke bevorzugt im Bereich von 0 bis 0,2, insbesondere von 0 bis 0,1, liegen können.

Die kationisierte und hydroxyalkylierte bzw. alkylveresterte Amylopektinstärke ist neu und stellt daher auch einen Gegenstand der vorliegenden Erfindung dar. Ebenso neu ist daher auch die kationisierte und hydroxyalkylierte bzw. alkylveresterte Wachsmaisstärke sowie die kationisierte und hydroxyalkylierte bzw. alkylveresterte Amylopektin-Kartoffelstärke.

Die Modifikationen der Stärke zur Herstellung von Ethern und Estern allgemein sind in der Fachwelt gut bekannt und werden z.B. in O.B. Wurzburg (Ed.): Modified Starches: Properties and Uses, CRC Press Inc., Boca Raton, Florida, 1986, Kap. 4, 5 und 6, beschrieben. In der Regel erfolgt die Hydroxyalkylierung durch Umsetzung mit Alkylenoxiden (Ethylenoxid, Epoxypropan, Epoxybutan, Epoxypentan, Epoxyhexan), wobei die Propoxylierung besonders bevorzugt ist. Die Veresterung der Stärke kann z.B. durch Reaktion mit den Anhydriden von organischen Säuren, vor allem Monocarbonsäuren, durchgeführt werden. Bevorzugt ist die Bildung von Stärkeestern des Typs Acetat-, Propionatund Butyratstärke.

Auch Kationisierungsverfahren gehören zum Stand der Technik und erfolgen mit Amino-, Imino-, Ammonium-, Sulfonium- oder Phosphoniumgruppen-enthaltenden Verbindungen. Methoden zur Herstellung von kationisierten Stärken sind z.B. von D.B. Solareck: Cationic Starches, in dem Buch von O.B. Wurzburg (Ed.): Modified Starches: Properties and Uses, CRC Press Inc., Boca Raton, Florida, 1986, pp.113-130, beschrieben. Solche kationische Derivate enthalten bevorzugt stickstoffhaltige Gruppen, insbesondere primäre, sekundäre, tertiäre und quaternäre Amine, bzw. Sulfonium- und Phosphoniumgruppen, die über Ether- oder Esterbindungen gebunden sind. Bevorzugt ist der Einsatz von kationisierten Stärken, die elektropositiv geladene quaternäre Ammoniumgruppen enthalten.

Die Stärke kann aber auch durch Reaktion oder Komplexbildung von nativer Stärke, abgebauter Stärke oder von Stärkederivaten mit kationischen Polymeren, wie z.B. Polyethyleniminen, Polyaminen, Polyamidoaminen, Polydiallyldimethylammoniumchlorid (Poly-DADMAC), kationischem Polyacrylamid, Polyamidoaminoepichlorhydrin-Harzen oder Polyvinylamin bzw. teilhydrolysiertem Polyvinylformamid, kationisiert werden.

Die kationisierte hydroxyalkylierte bzw. alkylveresterte Stärke kann durch Mischen von kationisierter mit hydroxyalkylierter bzw. alkylveresterter Stärke hergestellt werden. Bevorzugt ist es jedoch, wenn die Stärke innerhalb des Moleküls kationisiert und hydroxyalkyliert bzw. alkylverestert ist, d.h. wenn die Stärke durch gleichzeitige Kationisierung und Hydroxyalkylierung bzw. Veresterung oder durch Kationisierung einer hydroxyalkylierten bzw. alkylveresterten Stärke oder umgekehrt hergestellt wird. Die Wirksamkeit der zweifach derivatisierten Stärke ist besser als die der Gemische.

Wenn die neuen Stärkederivate aus Kartoffelstärke und Amylopektin-Kartoffelstärke hergestellt sind, so enthalten sie, im Gegensatz zu den üblichen Getreidestärken und den Getreidestärken des Typus "waxy", chemisch gebundene Phosphatgruppen, die überwiegend an dem Amylopektin gebunden sind. Diese natürlich vorhandenen anionischen Gruppen verleihen der Kartoffelstärke und besonders der Amylopektin-Kartoffelstärke spezifische Polyelektrolyteigenschaften, die sehr vorteilhafte Leimungsmittelzusammensetzungen bewirken.

Die neuen Stärkederivate können auch zusätzlich derivatisiert werden, z.B. durch weitere Veresterungsreaktionen und/oder Veretherungsreaktionen. Z.B. können die Stärken zusätzlich durch eine Vernetzungsreaktion modifiziert werden. Gegebenenfalls können die neuen Stärken auch als Stärke-Pfropfpolymerisate vorliegen. Gewünschtenfalls können die erfindungsgemäßen Stärkederivate auch in Mischung mit anderen Stärken bzw. Stärkedrivaten vorliegen.

Die neuen Stärkederivate können durch Oxidation, thermische, thermochemische, säurekatalytische oder enzymatische Behandlung in abgebauter Form vorliegen.

Ein wesentlicher Aspekt der vorliegenden Erfindung sind Leimungsmittelzusammensetzungen, die als cellulosereaktive Leimungsmittel C₆-C₃₀-Alkylketendimere (AKD) enthalten.

Bei der Verwendung in den sogenannten AKD-Leimen zeichnen sich die kationisierten und hydroxyalkylierten bzw. alkylveresterten Stärken durch folgende Vorteile aus:
- geringere durchschnittliche Teilchengröße (< 2 µm);
- schärfere Verteilung der Teilchengröße;
- bessere Stabilität der AKD-Leime im Verhältnis zu nur kationisierter Stärke;
- Unterstützung der Hydrophobierungswirkung im Papier, daher geringerer AKD-Zusatz für gleiche Wirkung möglich;
- kann auch vorteilhaft als AKD-Oberflächenleimung eingesetzt werden.

Die Vorteile der kationisierten und hydroxyalkylierten bzw. alkylveresterten Amylopektinstärken sind:
- höhere Stabilität der AKD-Leime;
- höheres durchschnittliches Molekulargewicht der Stärke;
- bessere Affinität zu Zellulose;
- bessere Retentionswirkung im Papier;
- kann auch sehr vorteilhaft als AKD-Oberflächenleimung eingesetzt werden.

Die Vorteile der kationisierten und hydroxyalkylierten bzw. alkylveresterten Amylopektin-Kartoffelstärke sind:
- besonders hohe Stabilität der AKD-Leime;
- kann auch besonders vorteilhaft als AKD-Oberflächenleimung eingesetzt werden; - ampholytischer Charakter wegen des erhöhten Phosphatgehaltes;
- bessere Retention von AKD-Leim in belasteten Papiersystemen (Systeme mit hoher Leitfähigkeit und hohen Calciumkonzentrationen, z.B. bei stark geschlossenen Papierkreisläufen und Altpapier-Systemen)
- stabilerer und konstanterer Leimeintrag, daraus resultierend eine konstantere Papierqualität.

Bei Verwendung einer kationisierten Amylopektin-Kartoffelstärke, die keine Hydroxyalkylierung oder Alkylversterung aufweist, werden viele dieser Vorteile auch erreicht, ohne daß der zusätzliche Schritt der zweiten Derivatisierung vorgenommen werden muß.

Hinsichtlich der Herstellung der AKD-Leime wird auf die einschlägigen Literaturstellen verwiesen. Vgl. z.B. EP 0 369 328 und DE-A1 39 20 356.

Die neuen Stärkederivate sind auch in weiteren bekannten hydrophoben Papierleimungsmittelzusammensetzungen für neutrale bis alkalische Leimungssysteme sehr gut geeignet. Besonders vorteilhafte cellulosereaktive Leimungsmittel zur Verwendung in Kombination mit den neuen Stärken sind die
a) Cyclischen Dicarbonsäureanhydride der Formel 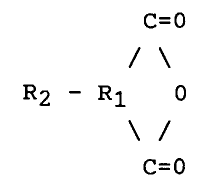 wobei R₁ für einen Alkylenrest mit 2 oder 3 Kohlenstoffatomen und R₂ für einen Kohlenwasserstoffrest mit 7 bis 30 Kohlenstoffatomen steht. Besonders geeignet ist z.B. Isooctadecenylbernsteinsäureanhydrid.
b) Säureanhydride der Formel R₃-CO-O-CO-R₄, in welchen R₃ und R₄ gleiche oder verschiedene C₇-C₃₀-Kohlenwasserstoffreste, vorzugsweise C₁₄-C₂₂-Kohlenwasserstoffreste, sind.
c) Isocyanate der Formel R₅-N=C=O, in welcher R₅ ein Kohlenwasserstoffrest mit 7 bis 30 Kohlenstoffatomen ist.

Ebenso sind auch Polymerleimungsmittel, insbesondere auf Basis von (Meth)acrylsäureester, Styrol, Acrylnitril, in Kombination mit den erwähnten Stärkederivaten ausgezeichnet verwendbar, wobei sie gegebenenfalls auch in Mischung mit den celluloserektiven Leimungsmitteln eingesetzt werden können.

Wieder sind die Derivate der Amylopektinstärke besonders gut geeignet. Als Stärkeausgangsmaterialien wird Stärke aus Wachsmais und aus durch molekularbiologische Methoden modifizierten, insbesondere aus gentechnisch veränderten Kartoffeln empfohlen, Hiebei zeigte sich wieder, daß es bei Amylopektin-Kartoffelstärke häufig genügt, mit der kationisierten Form zu arbeiten, da diese in vieler Hinsicht vergleichbare Ergebnisse wie doppelt derivatisierte Standard-Stärke oder Wachsmaisstärke ergibt.

Bevorzugt enthält die Amylopektinstärke weniger als 20 % Amylose, vorzugsweise 0 % bis 8 %, insbesondere 0 % bis 3 % Amylose.

Gegebenenfalls kann auch bei diesen Leimungsmittelzusammensetzungen die verwendete Stärke zusätzlich derivatisiert sein, z.B. durch weitere Veresterungs- und/oder Veretherungsreaktionen. Z.B. kann die Stärke außerdem durch eine Vernetzungsreaktion modifiziert sein. Gegebenenfalls können die neuen Stärken auch als Stärke-Pfropfpolymerisate vorliegen. Gewünschtenfalls können die erfindungsgemäßen Stärkederivate auch in Mischung mit anderen Stärken bzw. Stärkedrivaten vorliegen. Die eingesetzten Stärkederivate können auch, z.B. durch Oxidation, thermische, thermochemische, säurekatalytische oder enzymatische Behandlung, in abgebauter Form vorliegen.

In diesen neutralen bis alkalischen Leimungssystemen werden die genannten Stärkeprodukte als besonders faseraffine und wirksame Emulgatoren eingesetzt. Dies gilt insbesondere für die sogenannten ASA-Leime (Leimung mit "alkenyl succinic anhydride", hydrophob substituiertes Bernsteinsäureanhydrid).

Die kationisierte und hydroxyalkylierte bzw. alkylveresterte Amylopektin-Kartoffelstärke bringt durch ihre hervorragenden Polyelektrolyteigenschaften besondere Vorteile bei allen genannten Leimungsystemen, da eine deutliche Reduktion der Bildung von klebrigen Ablagerungen auf Papiersieb, Filz und Walzen zu beobachten ist und meistens die Notwendigkeit der Zudosierung von Aluminiumsulfat bei Papiersystemen mit erhöhter Calcium- und/oder Magnesiumbelastung nicht mehr oder in reduziertem Ausmaß notwendig ist.

Hinsichtlich der Herstellung dieser Leime wird auf die einschlägigen Literaturstellen verwiesen. Vgl. z.B. EP 0 743 394.

Die Verwendung der neuen kationisierten und hydroxyalkylierten bzw. alkylveresterten Stärke in der Papierherstellung allgemein ist auch ein Aspekt der vorliegenden Erfindung. Die neuen Stärkederivate sind zur Oberflächenleimung von Papier, zum Papierstreichen und als Zusatzmittel zu Papierstoffbei der Herstellung von Papier vorzüglich geeignet.

Gemäß einem weiteren Aspekt der vorliegenden Erfindung werden daher neue Mittel zur Oberflächenleimung von Papier zur Verfügung gestellt, die ein Bindemittel auf der Basis von kationisierter Stärke sowie gegebenenfalls in diesem Zusammenhang bekannte Bestandteile enthalten. Diese Mittel zur Oberflächenleimung sind dadurch gekennzeichnet, daß die verwendete Stärke eine kationisierte und hydroxyalkylierte bzw. alkylveresterte Stärke mit einem Kationisierungsgrad (DS) von 0,005 bis 0,4 und einem Hydroxyalkylierungsgrad bzw. Alkylveresterungsgrad (DS) von 0,005 bis 0,75 ist. Bevorzugt sind Kationisierungsgrade im Bereich von 0,015 bis 0,2, vorzugsweise bis 0,12; insbesondere von 0,035 bis 0,06. Die Hydroxyalkylierungsgrade bzw. Alkylveresterungsgrade liegen bevorzugt im Bereich von 0,015 bis 0,2, insbesondere von 0,02 bis 0,1.

Die Länge der Kohlenstoffketten in den Hydroxyalkyl- bzw. Alkylestergruppen liegt im Bereich von 1 bis 6 Kohlenstoffatomen.

Besonders bevorzugt besteht die Stärke in den neuen Mitteln zur Oberflächenleimung aus einer kationisierten und hydroxyalkylierten bzw. alkylveresterten Amylopektinstärke, vorzugsweise auf Basis von Wachsmais oder Kartoffel, wobei die Stärke günstigerweise aus durch molekularbiologische, insbesondere gentechnische Methoden veränderten Kartoffeln gewonnen wird.

Es hat sich herausgestellt, daß bei Verwendung von Amylopektin-Kartoffelstärke häufig eine nur kationisierte ebenso wie eine nur hydroxyalkylierte oder eine nur alkylveresterte Stärke für viele Fälle ausgezeichnete Ergebnisse bewirkt. Daher sind bevorzugte Oberflächenleimungsmittel solche, die kationisierte oder hydroxyalkylierte oder alkylveresterte Amylopektin-Kartoffelstärke enthalten. In bestimmten Fällen kann es jedoch auch von Vorteil sein, eine doppelte Derivatisierung der Amylopektin-Kartoffelstärke vorzunehmen, um die gewünschten Ergebnisse zu erzielen.

Die oben genannten Mittel zur Oberflächenleimung bringen ausgeprägte Vorteile, wie z.B. erhöhte Stärkeretention, optimales Penetrationsverhalten, hervorragende Filmbildung, Unterstützung der Papierhydrophobierung, erhöhte Papierfestigkeit, hohe Bindekraft und geringe Staubbildung. Insbesondere wenn das Mittel auf Basis von kationisierte und/oder hydroxyalkylierter bzw. alkylveresterter Amylopektin-Kartoffelstärke formuliert ist, wird eine Verbesserung der Rheologie des Mittels erzielt.

Ein weiterer Aspekt der vorliegenden Erfindung sind Beschichtungsmittel für Papier, die insbesondere als Mittel zum Streichen von Papier verwendbar sind und ein Bindemittel auf der Basis von Stärke sowie gegebenenfalls an sich in diesem Zusammenhang bekannte Bestandteile enthalten.

Diese Bindemittel sind dadurch gekennzeichnet, daß die Stärke aus einer Amylopektin-Kartoffelstärke besteht. Diese kann kationisiert und/oder hydroxyalkyliert bzw. alkylverestert sein, muß jedoch nicht unbedingt solche Substituenten enthalten.

Beschichtungsmittel werden in der Papierindustrie bei der Oberflächenleimung, Oberflächenpigmentierung oder beim Streichen von Papier eingesetzt. Sie dienen zur Oberflächenverbesserung, als papierfestigende Mittel, filmbildende Mittel, Mittel zur Unterbindung des Staubens und dergl.

Die Oberflächenverbesserung von Papieren zeigt sich in erhöhter Tinten- und Radierfestigkeit, erhöhter Rupffestigkeit, verringerter Neigung zum Stauben sowie in verbessertem Glanz und verbesserter Glätte nach dem Satinieren. Druckpapiere für den Offsetdruck müssen wegen der hohen Rupfbeanspruchung bei Befeuchtung im Druckwerk eine Oberflächenleimung aufweisen. Als Leimungsmittel zur ein- oder beidseitigen Oberflächenleimung wird meistens modifizierte, abgebaute Stärke in wässerigem Medium verwendet. Wenn ein Beschichtungsmittel im Sinne der vorliegenden Erfindung als Leimungsmittel verwendet wird, so besteht es zum überwiegenden Teil aus dem Bindemittel selbst.

Um die Oberflächenrauhigkeit, die sich beim Bedrucken des Papiers störend auswirkt, zu beseitigen, werden Papiere und Kartons häufig gestrichen oder pigmentiert. Darunter versteht man das ein- oder beidseitige Aufbringen einer Streichfarbe, die aus einem Gemisch von Pigmenten, Bindemitteln (Stärke oder synthetischer Binder) und verschiedenen Hilfsmitteln in wässerigem Medium besteht. Die dadurch erzielte Abdeckung und Ausgleichung der Papieroberfläche führt zu einer Erhöhung der Glätte, des Glanzes und der Weiße des Papiers, vor allem aber wird die Bedruckbarkeit bei allen gängigen Druckverfahren entscheidend verbessert.

In den oben genannten Beschichtungsmitteln ist es wegen der hohen Viskosität der verkleisterten Stärke nicht möglich, große Mengen nativer, nicht abgebauter Stärke oder von Stärkederivaten einzusetzen. Daher ist eine partielle Depolymerisation der Stärke notwendig. Die Depolymerisation der Stärke wird üblicherweise durch oxidativen, thermischen, thermochemischen, säurekatalytischen Abbau oder sehr häufig durch ein oder mehrere enzymatische Verfahrensschritte oder eine Kombination hievon erreicht. Mit steigendem Abbau der Stärkemoleküle werden andererseits aber die gewünschten Eigenschaften, wie z.B. Bindekraft, zunehmend geschwächt. Unabhängig davon ist es ein Nachteil, daß die Viskosität der aus diesen depolymerisierten Stärken hergestellten Kleister nicht stabil ist. Die Viskosität der Kleister steigt beim Abkühlen und in Abhängigkeit von der Zeit mehr oder weniger stark an. Dieser Effekt ist bei normaler amylosehaltiger Stärke auf die Retrogradation der vorhandenen Amylose zurückzuführen. Zusätzlich zur unangenehmen Erhöhung der Viskosität entstehen während der Beschichtung von Papier häufig störende Ablagerungen auf der Leim- oder Filmpresse sowie am Streichkopf und in den Zwischenbehältern des Beschichtungsmittels durch ausgefallene Amylosekristalle.

Um das Phänomen der Retrogradation von Amylose zu umgehen, wurden bisher depolymerisierte, veresterte oder veretherte natürliche Stärkederivate, die eine geringere Retrogradationsneigung aufweisen, in das Beschichtungsmittel aufgenommen. Eine gezielte Kombination von Derivatisierungen wurde bisher für diesen Zweck nicht bekannt. Weiters ist es möglich, durch Zusatz von bestimmten Additiven die Stärkelösung viskositätsstabiler zu machen. Allerdings zeigen diese Produkte oft nur eine unzureichende Stabilität und neigen weiterhin zur Amylosekristallisation. Der Zusatz von Hilfsmitteln führt zu komplexeren und damit schwieriger handhabbaren Beschichtungsmitteln.

Überraschenderweise hat sich nun herausgestellt, daß die genannten kationisierten und hydroxyalkylierten bzw. alkylveresterten Stärken eine sprunghaft höhere Stabilität und erheblich reduzierte Neigung zur Amylosekristallisation im Vergleich zu den herkömmlichen Stärken und Stärkederivaten aufweisen.

Das Problem der Amylosekristallisation, das besonders stark ausgeprägt ist, wenn Leimungsmittel auf Basis amylosehaltiger Stärken und Stärkederivate bei Temperaturen zwischen 67°C und 89°C und insbesondere im Temperaturbereich von 72°C bis 82°C aufbewahrt oder eingesetzt werden, kann durch Verwendung der doppelt derivatisierten Stärken sehr gut herabgesetzt werden. Noch besser ist es jedoch, wenn die Beschichtungsmittel überhaupt keine Amylose enthalten.

Natürliche Stärken haben in der Regel einen Amylosegehalt von 15 % bis 30 % in Abhängigkeit von der Pflanzenart, aus der sie gewonnen werden. Stärke mit einem hohen Amylopektingehalt wird derzeit aus den sogenannten "waxy" Mutanten von Reis, Sorghum, Gerste und hauptsächlich Mais gewonnen. Wachsmaisstärke ist bei weitem die wichtigste Getreidestärke des Typus "waxy". Allerdings ist der Anbau von Wachsmais, aus dem die Wachsmaisstärke gewonnen wird, in Ländern mit kaltem oder temperiertem Klima, wie in Osterreich, Deutschland, Belgien, den Niederlanden, Großbritannien, Polen usw., wirtschaftlich wenig sinnvoll bzw. unmöglich. Dagegen ist der Anbau von Kartoffeln in diesen Ländern wesentlich günstiger. Bedingt durch die Eigenschaften und den relativ hohen Preis der Wachsgetreidestärken liegt deren Einsatzgebiet hauptsächlich im Lebensmittelbereich.

Es sind Verfahren bekannt, um auf physikalisch-chemischem Weg den Amylosegehalt von Kartoffelstärke herabzusetzen. Der Aufwand hiefür ist jedoch beträchtlich und kann nur betrieben werden, wenn wirtschaftliche Gesichtspunkte es erlauben.

Um die chemischen Methoden der Trennung von Amylose und Amylopektin zu umgehen, bestanden in letzter Zeit intensive Bemühungen, Kartoffelpflanzen so zu modifizieren, daß die von diesen Pflanzen produzierte Stärke einen höheren Amylopektingehalt im Verhältnis zu üblicher Kartoffelstärke aufweist. Tatsächlich ist es gelungen, durch gentechnische Eingriffe eine solche Veränderung im Genom der Kartoffel zu erzielen, sodaß die gebildete Stärke nur mehr geringe Mengen an Amylose enthält. Die Stärke, die aus in dieser Hinsicht gentechnisch veränderten Kartoffeln gewonnen wird, besteht überwiegend aus Amylopektin.

Überraschenderweise zeigen die neuen Beschichtungsmittel nicht nur vorteilhaftere betriebstechnische Eigenschaften als die Mittel auf Basis von Standard-Stärke, sondern es sind auch die damit erhaltenen Papier-, Karton- und Pappeprodukte in vieler Hinsicht verbessert. Außerdem bietet die Herstellung der neuen Beschichtungsmittel in ökologischer und wirtschaftlicher Hinsicht zahlreiche Vorteile. günstig ist es, wenn die verwendete Kartoffelstärke einen Amylosegehalt von weniger als 20 %, vorzugsweise von 0 % bis 8 %, insbesondere von 0 % bis 3 % aufweist.

Ein Beschichtungsmittel mit einem Gehalt an einer Amylopektin-Stärke in abgebauter und derivatisierter Form, die aus Kartoffeln gewonnen wird, die im Hinblick auf die Produktion von Amylopektin-Stärke gentechnisch verändert wurden, ist eine besonders vorteilhafte Ausführungsform der vorliegenden Erfindung. Jedoch kann jede Amylopektin-Stärke, die durch andere Pflanzenveränderungen zur Unterdrückung der Amylosebildung gewonnen wird, ebenso eingesetzt werden.

Die physikalischen Eigenschaften des Amylopektins sind besonders günstig. So ergeben zum Beispiel Kleister aus nativer Amylopektin-Kartoffelstärke sehr klare und viskostabile Stärkelösungen. Im Zuge der Forschungen auf diesem Gebiet hat sich herausgestellt, daß das Amylopektin-Stärkekorn deutlich stabiler als das gewöhnliche Stärkekorn ist. Dadurch sind Reaktionen im Slurry effizienter und bei höherer Umsetzungsrate durchführbar.

Zusammensetzung und Eigenschaften von Amylopektin-Kartoffelstärke weichen deutlich von denen der Getreidestärken des Typus "waxy" ab. Amylopektin-Kartoffelstärke hat zum Beispiel einen deutlich niedrigeren Gehalt an gebundenen Lipiden und Proteinen als Wachsgetreidestärken. Geruchs- und Schaumprobleme, wie sie oft beim Einsatz von Wachsgetreidestärken oder deren Derivaten vorkommen, werden beim Einsatz von Kartoffelstärke oder Amylopektin-Kartoffelstärke nicht oder nur selten und in geringerem Ausmaß beobachtet. Im Gegensatz zu Wachsgetreidestärken enthält Amylopektin-Kartoffelstärke chemisch gebundene Phosphatgruppen und besitzt daher spezifische Polyelektrolyteigenschaften.

Stärke in Beschichtungsmitteln wird bevorzugt in abgebauter, d.h. depolymerisierter Form eingesetzt. Kleister aus depolymerisierten amylosehaltigen Stärken zeigen eine sehr ausgeprägte Retrogradationsneigung. Unter bestimmten Bedingungen kommt es sogar zum Gelieren des Kleisters. Dieses Verhalten ist eine besonders ungünstige Eigenschaft der üblichen Stärken in der industriellen Beschichtungspraxis. Im Zuge der Forschungen auf diesem Gebiet zeigte es sich nun, daß depolymerisierte Amylopektin-Kartoffelstärke im Vergleich zu den üblichen abgebauten Stärkekleistern eine stabilere Viskosität aufweist. Überraschenderweise zeigt die durch Hydroxyalkylierung oder Alkylveresterung derivatisierte Amylopektin-Kartoffelstärke eine noch höhere Stabilität der Kleisterviskosität. Die Verwendung von depolymerisierter und derivatisierter Amylopektin-Kartoffelstärke führt zu einer deutlich höheren Stabilität des Beschichtungsmittels, das nun, im Gegensatz zu Beschichtungen mit den üblichen Stärken, auch nach deutlich längeren Standzeiten noch einsetzbar und verwendbar ist.

Durch die deutlich reduzierte Menge bzw. das Fehlen von Amylose in der Amylopektin-Kartoffelstärke kommt es bei der Anwendung der Beschichtungsmitttel zu keinen Ausfällungen von Amylosekristallen, die beim Einsatz von anderen Stärken zu Ablagerungen auf den Auftragssystemen und zu einem schlechteren Laufverhalten der Leim- oder Filmpressen bzw. des Streichaggregates führen. Der Verlauf der Papierbeschichtung wird störungsfrei und der verminderte Reinigungsaufwand bei längeren Reinigungszyklen der Beschichtungsmaschine stellt einen weiteren wirtschaftlichen und betriebsmäßigen Vorteil dar. Die Derivatisierung der Amylopektin-Kartoffelstärke unterstützt wesentlich die vorteilhafte Wirkung dieser Stärke. Ein besonders günstiges Merkmal der vorliegenden Erfindung liegt darin, daß die neuen Beschichtungsmittel ein deutlich verbessertes Laufverhalten, z.B. auf der Leim- oder Filmpresse, aufweisen. Durch dieses günstige Laufverhalten wird eine Erhöhung der Auftragsgeschwindigkeit und eine Steigerung der Produktivität der Beschichtungsanlage erreicht.

Die Verwendung von durch Kationisierung und/oder Hydroxyalkylierung bzw. Alkylveresterung derivatisierter Amylopektin-Kartoffelstärke im Bindemittel der neuen Beschichtungsmittel bringt im Vergleich zu herkömmlicher Kartoffelstärke oder Amylopektin-Kartoffelstärke, Maisstärke oder Wachsmaisstärke in den Substanzeigenschaften der damit hergestellten Produkte überraschend ausgeprägte Vorteile, wie z.B. erhöhte Stärkeretention, optimales Penetrationsverhalten, hervorragende Filmbildung, Unterstützung der Papierhydrophobierung, erhöhte Papierfestigkeit, hohe Bindekraft, geringe Staubbildung, hohen Glanz und hohe Weiße nach dem Satinieren, gleichmäßigere Migration und dadurch reduzierte Druckfleckigkeit (Mottling). Das Bindemittel insbesondere auf Basis von derivatisierter Amylopektin-Kartoffelstärke bewirkt eine Verbesserung der Rheologie des Beschichtungsmittels.

Aufgrund der überraschend vorteilhaften Eigenschaften der mit dem neuen Beschichtungsmittel hergestellten Produkte kann die Einsatzmenge der wie angegeben derivatisierten Amylopektin-Kartoffelstärke gegenüber herkömmlichen Stärken und Stärkederivaten deutlich reduziert werden. Diese Verminderung kann Ausmaße bis zu 40 %, meist aber bis zu etwa 30 % der bisher eingesetzten Mengen annehmen. Eine solche Herabsetzung der Einsatzmenge um z.B. 30 % bedeutet aber einen Qualitätsvorsprung der Produkte im Vergleich zu mit herkömmlichen Beschichtungsmitteln veredelten Papieren. Daher ist es ein besonders vorteilhaftes Merkmal der vorliegenden Erfindung, daß die neuen Beschichtungsmittel eine bis zu etwa 40 % verringerte Einsatzmenge der derivatisierten Amylopektin-Stärke im Verhältnis zu üblicher Stärke aufweisen.

Bei der Herstellung der Stärkederivate bewirkt die genannte höhere Kornstabilität des Amylopektins, wenn dieses aus durch molekularbiologische Methoden veränderten Kartoffeln gewonnen wurde, eine Vereinfachung der Herstellungstechnologie. Das Amylopektin ist weniger alkali- und weniger temperaturempfindlich als die Amylose. Derivatisierungsreaktionen, wie z.B. Veretherungs- und Veresterungsreaktionen, sowie viele weitere Reaktionen, die bevorzugt zur Derivatisierung der Stärke eingesetzt werden, können dadurch bei kürzeren Reaktionszeiten intensiviert und der Einsatz von Verkleisterungsschutzsalzen kann deutlich herabgesetzt werden. Die Einsparung an Reaktionszeit und die deutliche Reduktion der Einsatzchemikalien äußert sich nicht nur wirtschaftlich in verminderten Herstellungskosten, sondern auch in ökologischer Hinsicht. So werden z.B. die Salzfrachten und die CSB-Belastung der Reaktionsabwässer merklich herabgesetzt.

Für manche spezifische Anwendungen ist eine weitere Derivatisierung der Amylopektin-Kartoffelstärke vorteilhaft. So kann z.B. eine geringfügige Vernetzung (z.B. mit Epichlorhydrin, Natriumtrimetaphosphat, Adipinsäureanhydrid, Phosphoroxychlorid) der Stärke dieser neue Eigenschaften verleihen und die Depolymerisation der Stärke beeinflussen bzw. steuern. Vorzugsweise liegt die depolymerisierte und derivatisierte Stärke als Diethylaminoethyl-, Hydroxypropyltrimethylammoniumchlorid, Hydroxyethyl-, Hydroxypropyl-, Hydroxypropylsulfonat-, Hydroxybutyl-, Hydroxypentyl-, Hydroxyhexyl-, Carboxymethyl-, Cyanoethyl-, Carbamoylethylether oder Formyl-, Acetyl-, Propionyl-, Butyryl-, Succinyl-, Octenylsuccinyl-, Sulfonyl-, Sulfat-, Phosphat-, Carbamidester oder als Gemisch hievon vor.

Mit besonderem Vorteil werden in den Beschichtungsmitteln die erfindungsgemäßen neuen kationisierten und hydroxyalkylierten Amylopektinstärken verwendet, die auch in abgebauter bzw. depolymerisierter Form vorliegen können. Sie zeigen eine deutlich bessere Filmbildung im Vergleich zu herkömmlichen Stärken. Die Hydrophobie des Papiers ist ausgeprägter und somit wird auch die Bedruckbarkeit besser. Die Papierfestigkeit steigt durch die erhöhte Bindekraft, die Staubbildung wird herabgesetzt. Die entstehenden Papiere haben hohen Glanz und hohe Weiße nach dem Satinieren, gleichmäßigere Migration und dadurch reduzierte Druckfleckigkeit. Insgesamt zeigt das Leimungsmittel auf Basis von kationisierter, hydroxyalkylierter bzw. alkylveresterter Amylopektinstärke, insbesondere -Kartoffelstärke, eine deutliche Verbesserung der Rheologie.

Beim Pigmentieren und Streichen zeigen sich folgende Vorteile:
- positive Wirkung auf die Streichfarbenrheologie
- besonders hohe Viskositätsstabilität von Stärke und Streichfarbe
- verbesserte Bindekraft, daher höhere Trocken- und Naßrupffestigkeit
- bessere Filmbildungseigenschaften, daher regelmäßigere Oberflächenformation
- verbesserte Bedruckbarkeit

Die für die neuen Beschichtungsmittel verwendete Stärke kann wieder als Kochstärke oder als kaltwasserquellbare oder kaltwasserlösliche Stärke eingesetzt werden. Die Verkleisterung bzw. der Aufschluß von granulärer Stärke kann durch gebräuchliche und bekannte Verfahren, wie z.B. Walzentrocknung, Extrusion u.ä. erfolgen. Kaltwasserlösliche abgebaute Amylopektin-Stärke kann mit oder ohne Vorverkleisterung durch Sprühtrocknung hergestellt werden. Zur optimalen Entfaltung der Eigenschaften der kaltwasserlöslichen Stärke bzw. Stärkederivate für den Einsatz in den neuen Beschichtungsmitteln ist der Aufschlußgrad von großer Bedeutung.

In einer Variante der neuen Beschichtungsmittel kann die Stärke als Stärke-Pfropfpolymer vorliegen. Vorzugsweise ist die Stärke ein Stärke-Pfropfpolymerisat mit Acrylverbindungen, wie z.B. Acrylamid, Methylmethacrylat, Ethylacrylat, Acrylnitril, oder Vinylverbindungen, wie Vinylacetat oder Styrol, oder Butadien oder Mischungen hievon.

Im Rahmen der vorliegenden Erfindung liegen auch Beschichtungsmittel, die native, abgebaute oder derivatisierte Stärken aus der gleichen oder aus anderen pflanzlichen Quellen, Cellulose oder Cellulosederivate, andere Hydrokolloide oder deren Derivate, Proteine oder deren Derivate, synthetische Binder oder Cobinder, natürliche oder synthetische Hilfsmittel, Pigmente, Füllstoffe und weitere für diesen Zweck bekannte Bestandteile enthalten.

Ebenfalls Gegenstand der vorliegenden Erfindung sind Zusatzmittel auf Basis kationischer Stärke zu Papierstoff bei der Herstellung von Papier, die gegebenenfalls in diesem Zusammenhang übliche Hilfs- und Zusatzmittel enthalten.

Bei der Herstellung von Papier wird der Papierstoff, bestehend aus Faserrohstoffen, mineralischen Pigmenten und Füllstoffen, Wasser und üblicherweise einem oder mehreren Zusatzmitteln, über eine Stoffpumpe dem Stoffauflauf der Papiermaschine zugeführt. Der Stoffauflauf verteilt die Stoffsuspension gleichmäßig über die Maschinenbreite und bringt den Papierstoff mit der optimalen Geschwindigkeit auf das Sieb, sodaß eine bestmögliche Blattbildung gewährleistet wird.

Bei der Herstellung von Papier ist eine gute Entwässerung und Retention stark erwünscht. Eine schnellere Entwässerung ermöglicht eine Erhöhung der Geschwindigkeit der Papiermaschine und/oder eine Reduzierung des Energieverbrauchs in den nachfolgenden Sieb-, Presse- und Trockenpartien. Eine verbesserte Retention von Fasern, Füll- und Feinstoffen, Leimungsmitteln und anderen Additiven ermöglicht eine Reduzierung der verwendeten Ausgangsmaterialien und vereinfacht die Wiederverwertung des Siebwassers.

Fasern und Füllstoffe, die Hauptkomponenten bei der Papierherstellung, tragen eine negative Oberflächenladung, d.h. sie weisen einen ausgeprägten anionischen Charakter auf. Es ist bereits bekannt, daß die Entwässerung und Retention bei der Blattbildung stark vom Gesamtwert und der Verteilung dieser Ladungen beeinflußt wird. Üblicherweise wird der Papiersuspension eine durch Kationisierung positiv aufgeladene Stärke zugesetzt, die von den anionischen cellulosehaltigen Fasern stark angezogen wird. Die Affinität der kationischen Stärke ist allerdings bei belasteten Siebwasser-Kreisläufen, wo z.B. Calcium-Ionen mit der kationischen Stärke um die anionischen Ladungen konkurrieren, weniger ausgeprägt. Deutlich bessere Ergebnisse liefern Stärken, die ein günstiges Verhältnis von anionischen und kationischen Gruppen aufweisen. Stärken, die sowohl anionische als auch kationische Gruppen aufweisen, werden als amphotere Stärken bezeichnet.

Zusatzmittel auf Stärkebasis zu Papierstoff für die Herstellung von Papier dienen hauptsächlich zur Verbesserung von Retention und Entwässerung bei der Papierblattbildung sowie zur Steigerung der Trockenreißfestigkeit der entstehenden Papierprodukte. Diese Ergebnisse werden noch besser, wenn es sich um die Derivate von Amylopektinstärke handelt. Die besten Ergebnisse werden mit den Derivaten der Amylopektin-Kartoffelstärke erhalten.

Die neuen Zusatzmittel auf Basis kationischer Stärke für den Papierstoff bei der Herstellung von Papier sind erfindungsgemäß dadurch gekennzeichnet, daß die verwendete Stärke eine kationisierte und hydroxyalkylierte bzw. alkylveresterte Stärke mit einem Kationisierungsgrad (DS) von 0,005 bis 0,4 und einem Hydroxyalkylierungsgrad bzw. Alkylveresterungsgrad (DS) von 0,005 bis 0,75 ist. Bevorzugt sind Kationisierungsgrade im Bereich von 0,015 bis 0,2, vorzugsweise bis 0,12, insbesondere von 0,035 bis 0,06. Die Hydroxylierungsgrad bzw. Alkylveresterungsgrade liegen bevorzugt im Bereich von 0,015 bis 0,2, insbesondere von 0,02 bis 0,1.

Die Länge der Kohlenstoffketten in den Hydroxyalkyl- bzw. Alkylestergruppen liegt wieder im Bereich von 1 bis 6 Kohlenstoffatomen.

Besonders bevorzugt besteht die Stärke in den neuen Zusatzmitteln aus einer kationisierten hydroxyalkylierten bzw. alkylveresterten Amylopektinstärke, vorzugsweise auf Basis von Wachsmais oder Kartoffel, wobei die Stärke günstigerweise aus durch molekularbiologische, insbesondere gentechnische Methoden veränderten Kartoffeln gewonnen wird.

Amylopektinstärke hat im Verhältnis zu üblicher Stärke einen verringerten Amylosegehalt. Dieser beträgt bei Amylopektinstärke vorzugsweise weniger als 20 %, bevorzugt 0 % bis 8 % und insbesondere 0 % bis 3 %.

Interessanterweise hat sich herausgestellt, daß die Amylopektin-Kartoffelstärke sowohl in Form der kationischen Amylopektin-Kartoffelstärke als auch der hydroxyalkylierten Amylopektin-Kartoffelstärke sowie der alkylveresterten Amylopektin-Kartoffelstärke allein zu ausgezeichneten Ergebnissen führt. Somit enthalten manche bevorzugte Zusatzmittel kationisierte und/oder hydroxyalkylierte bzw. alkylveresterte Amylopektin-Kartoffelstärke.

In allen genannten Fällen der Verwendung der kationisierten und hydroxyalkylierten bzw. alkylveresterten Stärke kann diese durch Mischen von kationisierter mit hydroxyalkylierter bzw. alkylveresterter Stärke hergestellt werden. Bevorzugt ist es jedoch, wenn die Stärke innerhalb des Moleküls kationisiert und hydroxyalkyliert bzw. alkylverestert ist, d.h. wenn die Stärke durch gleichzeitige Kationisierung und Hydroxyalkylierung bzw. Veresterung oder durch Kationisierung einer hydroxyalkylierten bzw. alkylveresterten Stärke oder umgekehrt hergestellt wird. Die Wirksamkeit der zweifach derivatisierten Stärke ist besser als die der Gemische.

Die zum Einsatz bestimmten Stärkederivate können auch noch weiter derivatisiert werden, z.B. durch weitere Veresterungsreaktionen und/oder Veretherungsreaktionen. Z.B. können die Stärken zusätzlich durch eine Vernetzungsreaktion modifiziert werden. Gegebenenfalls können die neuen Stärken auch als Stärke-Pfropfpolymerisate vorliegen. Gewünschtenfalls können die erfindungsgemäßen Stärkederivate auch in Mischung mit anderen Stärken bzw. Stärkedrivaten vorliegen.

Die Stärkederivate können durch Oxidation, thermische, thermochemische, säurekatalytische oder enzymatische Behandlung in abgebauter Form vorliegen, allerdings werden nicht abgebaute Stärkederivate für diese neuen Zusatzmittel bevorzugt.

Bei der Verwendung als Zusatzmittel bei der Papierherstellung zeichnen sich die kationischen und hydroxyalkylierten bzw. alkylveresterten Stärken vor allem durch ihre wesentliche Unterstützung der Wirkung der cellulosereaktiven Leimungsmittel aus. Aufgrund der überraschend vorteilhaften Eigenschaften der mit dem neuen Zusatzmittel hergestellten Produkte kann die Einsatzmenge an cellulosereaktiven Leimungsmitteln gegenüber herkömmlichen Stärken und Stärkederivaten deutlich reduziert werden. Eine Herabsetzung der Menge um z.B. 25 % bedeutet aber einen deutlichen Qualitätsvorsprung der Produkte im Vergleich zu Produkten, die mit herkömmlichen Zusatzmitteln produziert wurden.

Der ampholytische Charakter von kationisierter Amylopektinstärke aus gentechnisch veränderten Kartoffeln ist eine besondere Eigenschaft dieser Stärke. Amylopektinstärke aus Wachsmais oder den anderen "waxy" Getreidesorten enthält keine chemisch gebundenen Phosphatgruppen. Natürlich vorkommende Kartoffelstärke hat dagegen einen Phosphatgehalt, wobei Amylopektinstärke aus gentechnisch veränderten Kartoffeln sogar einen um 20 % bis 30 % erhöhten Phosphatgehalt im Vergleich zu Stärke aus üblichen Kartoffeln zeigt. Aus diesem Grund ist Amylopektin-Kartoffelstärke wesentlich vorteilhafter als eine Stärke aus Getreide oder "waxy" Getreide. Der erhöhte Phosphatgehalt in Amylopektin-Kartoffelstärke verleiht dieser Stärke einen deutlich ausgeprägteren amphoteren Charakter als ihn normale Kartoffelstärke zeigt.

Der natürliche ampholytische Charakter der kationisierten Amylopektin-Kartoffelstärke kann durch Derivatisierung zusätzlich verstärkt werden. Die Einführung von anionischen Phosphat-, Phosphonat-, Xanthat- Carboxy-, Carboxymethyl-, Sulfonat- oder Sulfatgruppen vor, nach oder gleichzeitig zur Kationisierung ergibt Stärkederivate mit biionischem Charakter. Der Isoelektrische Punkt der amphoteren Amylopektin-Kartoffelstärke wird durch Variation des Verhältnisses von kationischen zu anionischen Gruppen bestimmt.

Gegenstand der Erfindung sind daher auch neue auf Stärke basierende Zusatzmittel zu Papierstoff bei der Herstellung von Papier, die dadurch gekennzeichnet sind, daß die Stärke eine amphotere Amylopektin-Kartoffelstärke mit einem Kationisierungsgrad (DS) von 0 bis 0,4, bevorzugt von 0,001 bis 0,2, insbesondere von 0,005 bis 0,1 und einem Anionisierungsgrad (DS) von 0 bis 0,4, bevorzugt von 0,005 bis 0,2, insbesondere von 0,008 bis 0,1 ist.

Diese amphotere Amylopektin-Kartoffelstärke ist neu und ist daher auch ein Gegenstand der vorliegenden Erfindung.

Die Verfahren zur Herstellung von anionischer Stärke sind in der Fachwelt bekannt und werden z.B. in O.B. Wurzburg (Ed.): Modified Starches: Properties and Uses, CRC Press Inc., Boca Raton, Florida, 1986, beschrieben.

Die besonders vorteilhaften Eigenschaften der neuen Zusatzmittel auf Basis von Amylopektin-Kartoffelstärke im Hinblick auf das Entwässerungsverhalten und die Gesamt-, Asche- und Stärkeretention in belasteten Papierkreisläufen mit hoher Leitfähigkeit, erhöhten Calciumkonzentrationen oder hohem Altpapieranteil sind maßgeblich auf das höhere mittlere Molekulargewicht und den amphoteren Charakter der Amylopektin-Kartoffelstärke zurückzuführen.

Bei der Masseleimung zeigt sich durch die erzielten deutlichen Vorteile, daß eine Reduktion des Leimungsmitteleinsatzes bei gleichen Ergebnissen erfolgen kann. Es zeigt sich auch eine bessere Wechselwirkung mit weiteren synthetischen Zusatzmitteln und eine verbesserte Wirksamkeit derselben.

In allen genannten Fällen kann die Stärke in kaltwasserlöslicher oder kaltwasserquellender Form eingesetzt werden.

Die vorliegende Erfindung betrifft auch Verfahren zur Herstellung von Papier bzw. oberflächenbehandeltem Papier, bei welchen ein oben genanntes Mittel verwendet wird.

Schließlich betrifft die vorliegende Erfindung auch Papier, das mit einem der genannten Mittel veredelt wurden.

Die folgenden Beispiele dienen zur Erläuterung der Erfindung, ohne dieselbe einzuschränken.

### Beispiel 1

In diesem Beispiel wird die Viskostabilität von depolymerisierter Amylopektin-Kartoffelstärke mit depolymerisierter gewöhnlicher Kartoffelstärke und kationisierter hydroxypropylierter Kartoffelstärke verglichen.

Die Depolymerisierung der Stärken erfolgt durch säurekatalytischen Abbau, dessen Produkte bekanntlich besonders stark zur Retrogradation neigen. Die Herstellung der depolymerisierten Stärken verläuft nach folgendem Verfahren:

Die Stärken werden mit Wasser zu einem Slurry mit 37 Gew.-% Stärke suspendiert. Die Stärkesuspension wird mit 14,3 g 30 %iger Salzsäure/100 g Stärke-Trockensubstanz versetzt und 7 Stunden bei 50°C abgebaut. Am Ende der Reaktionszeit wird die Stärkesuspension abgekühlt und mit Soda neutralisiert, gewaschen, filtriert und getrocknet.

Die Derivatisierung der Amylopektin-Kartoffelstärke erfolgt durch Reaktion von Amylopektin-Kartoffelstärke mit Propylenoxid (DS 0,05) und 2,3-Epoxypropyl-trimethylammoniumchlorid (DS 0,045).

Die Prüfung der Viskosität der depolymerisierten Stärken erfolgte an 20%igen Stärkesuspensionen, die mit Wasser angerührt und unter Rühren mit dem Magnetrührer 15 min bei 95°C aufgekocht wurden. Die Messung der Viskosität der Kleister erfolgte mit einem Brookfield Rotationsviskosimeter bei 100 Upm nach Abkühlung auf 80°C, 50°C und 25°C, nach 1 Stunde und zuletzt nach 24 Stunden Lagerung bei 25°C.

| Viskosität von säurekatalytisch abgebauten Stärken | | | |
|---|---|---|---|
| Viskosität[mPa.s] | Amylopektin-Kartoffelstärke | Kartoffelstärke | derivatisierte Kartoffelstärke |
| 80°C | 36 | 48 | 34 |
| 50°C | 48 | geliert | 44 |
| 25°C | 96 | Gel | 88 |
| nach 1 St. bei 25°C | 120 | Gel | 92 |
| nach 24 St.bei 25°C | Gel | Gel | 102 |

Aus diesem Beispiel ist ersichtlich, daß Lösungen von depolymerisierter Amylopektin-Kartoffelstärke eine stabilere Viskosität als säureabgebaute Kartoffelstärke aufweist. Überraschend ist die Stabilität der mit derivatisierter Amylopektin-Kartoffelstärke hergestellten Lösungen.

### Beispiel 2

### Einsatz in AKD-Leim

Es wird für dieses Beispiel eine Standard-Dispersion, bestehend aus einer Mischung von Alkyldiketen, Natriumligninsulfonat und Stärkederivat hergestellt. Hierfür wird eine 5%ige Stärkesuspension in Wasser 15 Minuten bei 95°C aufgekocht. Zu 99 Teilen der erhaltenen Stärkelösung wird 1 Teil anionisches Dispersionsmittel (z.B. Natriumligninsulfonat) zugesetzt und 20 Teile geschmolzenes Alkylketendimer, hergestellt aus einer Mischung von Stearinsäure und Palmitinsäure, zugesetzt und mittels Ultaturax grobteilig emulgiert. Die Emulsion wird dann anschließend zweimal in einem Hochdruckhomogenisator unter einem Druck von 200 bar behandelt und auf Raumtemperatur abgekühlt. Die so erhaltene Leimungsmittelemulsion wird mit Wasser auf eine Endkonzentration von 10 % verdünnt.

Die Leimungswirkung der erhaltenen Dispersionen wurde getestet, indem die Dispersionen zu einer verdünnten Zellstoffsuspension zugesetzt wurden, die dann in einem Laborblattbildner für die Herstellung von Papierblättern mit einem Blattgewicht von 75 g/m² eingesetzt wurden.

Die Qualität eines Leimungsmittels wird durch die mittlere Teilchengröße in der Dispersion/Emulsion definiert (je kleiner, um so besser ist die Hydrophobie des Papiers). Die Wirksamkeit des Leims im Papier wird über die Wasseraufnahme des geleimten Papiers (Cobb-Wert; je kleiner, um so besser) bestimmt.

| Stärke | DS kat | DS Prop | mittl. Teilchengr. | Stabilität | Cobb |
|---|---|---|---|---|---|
| Maisstärke | 0,045 | 0 | 2,21 | 2 Wochen | 30 |
| Kart.stärke | 0,048 | 0 | 2,04 | 2 Wochen | 30 |
| Wachsmaisst. | 0,045 | 0 | 1,86 | 3 Monate | 28 |
| AMP-Kart.st. | 0,047 | 0 | 1,75 | 3 Monate | 27 |
| Maisstärke | 0,047 | 0,045 | 1,87 | 3 Monate | 25 |
| Kart.stärke | 0,048 | 0,042 | 1,81 | 3 Monate | 25 |
| Wachsmaisst. | 0,045 | 0,044 | 1,77 | > 3 Monate | 24 |
| AMP-Kart.st. | 0,047 | 0,042 | 1,51 | > 3 Monate | 22 |
| AMP: Amylopektin | | | | | |

### Beispiel 3

### Einsatz in AKD-Leim

Herstellung der AKD-Leime wie in Beispiel 2.

| Stärke | DS kat | Alkoxid | DS alkox | mittl. Teilchengr. | Stabilität | Cobb |
|---|---|---|---|---|---|---|
| Wachsmaisst. | 0,039 | Propylenoxid | 0,045 | 1,82 | >3 Monate | 25 |
| Wachsmaisst. | 0,039 | Propylenoxid | 0,081 | 1,67 | >3 Monate | 23 |
| AMP-Kart.st. | 0,040 | Propylenoxid | 0,047 | 1,56 | >3 Monate | 23 |
| AMP-Kart.st. | 0,040 | Propylenoxid | 0,065 | 1,43 | >3 Monate | 21 |
| AMP-Kart.st. | 0,040 | Butylenoxid | 0,025 | 1,58 | >3 Monate | 22 |

### Beispiel 4

### Einsatz in ASA-Leim

Ein Leimungsmittel mit einem Teil an Alkenylbernsteinsäureanhydrid (ASA mit C16-18) und einem Teil an verkleisterter modifizierter Stärke wird mit einem Turbinen-Emulgierer hergestellt.

Die Leimungswirkung der erhaltenen Emulsionen wurde getestet, indem diese zu einer verdünnten Zellstoffsuspension zugesetzt wurden, die dann in einem Laborblattbildner für die Herstellung von Papierblättern mit einem Blattgewicht von 75 g/m² eingesetzt wurde.

Die Qualität eines Leimungsmittels wird durch die mittlere Teilchengröße in der Dispersion/Emulsion definiert (je kleiner, um so besser). Die Wirksamkeit des Leims im Papier wird mit Hilfe des HST-Tests (Hercules Sizing Test) geprüft. Dabei wird der Widerstand des geleimten Papiers gegenüber Tinte bestimmt. Je länger eine bestimmte Menge saurer Tinte braucht, um das geleimte Papier zu durchdringen (bestimmt durch die Abnahme der Lichtreflexion an der Papierunterseite), um so besser ist die Wirkung des Leims.

| Stärke | DS kat | Propox DS | Teilchengröße (µm) | HST (sec) |
|---|---|---|---|---|
| Maisstärke | 0,040 | 0 | 1,05 | 213 |
| Kart.stärke | 0,038 | 0 | 1,02 | 221 |
| Wachsmaisst. | 0,040 | 0 | 0,98 | 247 |
| AMP-Kart.st. | 0,039 | 0 | 0,95 | 305 |
| Maisstärke | 0,038 | 0,065 | 0,94 | 304 |
| Kart.st. | 0,038 | 0,061 | 0,90 | 332 |
| Wachsmaisst. | 0,040 | 0,063 | 0,81 | 342 |
| AMP-Kart.st. | 0,041 | 0,063 | 0,75 | 377 |

### Beispiel 5

In diesem Beispiel werden Beschichtungsmittel mit folgenden depolymerisierten Stärken bei der Oberflächenleimung von Papier untereinander verglichen.
1) Wachsmaisstärke
2) Kartoffelstärke
3) Amylopektin-Kartoffelstärke
4) kationisierte Amylopektin-Kartoffelstärke
5) propoxylierte Amylopektin-Kartoffelstärke
6) kationisierte und propoxylierte Amylopektin-Kartoffelstärke

Die Depolymerisierung der Stärke wird durch oxidativen Abbau mit Natriumhypochlorit erreicht. Die drei Stärken werden als wässerige Lösung auf Testliner (130 g/m²) mit Hilfe einer Labor-Leimpresse aufgetragen. Die oberflächengeleimten Papiere werden anschließend in einem Phototrockner auf ca. 5 % Restfeuchtigkeit getrocknet. Die folgende Tabelle faßt einige Eigenschaften der getrockneten, oberflächengeleimten Papiere zusammen.

| Stärke | Konzentration [%] | Stärkeaufnahme [%] | Berstdruck [kPa] |
|---|---|---|---|
| Wachsmaisstärke | 7,9 | 1,9 | 273 |
| Kartoffelstärke | 8,2 | 2,2 | 304 |
| Amylopektin-Kartoffelstärke | 8,4 | 2,9 | 361 |
| Amylopektin-Kartoffelstärke | 5,9 | 2, 1 | 312 |
| kationis. AMP-KS | 6,0 | 2,5 | 347 |
| propoxyl. AMP-KS | 7,3 | 2,9 | 362 |
| kat.⁺propoxyl. AMP-KS | 6,5 | 2,8 | 356 |

Aus diesem Beispiel ist ersichtlich, daß depolymerisierte Amylopektin-Kartoffelstärke zu deutlich höheren Festigkeitswerten führt als übliche Kartoffel- oder Wachsmaisstärke. Derivatisierte Amylopektin-Kartoffelstärke ermöglicht eine wesentliche Erhöhung der Stärkeaufnahme. Qualitativ hochwertige Papiere werden mit um ca. 30 % reduzierter Einsatzmenge erzielt.

### Beispiel 6

In diesem Beispiel wird eine Reihe von Stärken als Cobinder in einer Streichfarbenrezeptur mit folgender Zusammensetzung untersucht:
80 Teile Setacarb 75 (OMYA)
20 Teile Hydrocarb 75 (OMYA)
6 Teile Stärke
6 Teile Styronal D708 (BASF)
mit NaOH pH-Wert 8,8-9,0

Es wird ein Feststoffgehalt von 65 % mit Wasser eingestellt.
Brookfield-Viskosität (25°C, 100 Upm): 800-1200 mPa.s

Die Streichfarben werden mit einem Laborcoater (Lorentzen & Wettre) auf ein holzfreies 80 g/m² Rohpapier gestrichen (Auftragsmenge ca 10 g/m²). Die gestrichenen Papiere werden mittels Phototrockner auf eine Restfeuchtigkeit von 5 % getrocknet. Die gestrichenen Papiere werden mit Hilfe eines Laborkalanders (Kleinewefers) satiniert (60°C, 70 kg/cm², 2 Nips). Die Papiere werden anschließend bei 25°C auf 50 % relative Feuchtigkeit klimatisiert. Die qualitativen Eigenschaften der geprüften Papierstriche sind in folgender Tabelle zusammengefaßt:

| Eigenschaft | Oberfl.- formation | Glanz | Glätte | Trockenrupffestigk | Naßrupffestigk | Farbaufnahme | Mottling |
|---|---|---|---|---|---|---|---|
| WMS | ++ | ++ | ++ | ++ | + | ++ | ++ |
| KS | ++ | ++ | ++ | ++ | + | + | + |
| AMP-KS | +++ | ++ | ++ | +++ | ++ | ++ | +++ |
| kat. AMP-KS | +++ | ++ | ++ | ++++ | +++ | ++ | +++ |
| hydroxy-prop.AMP-KS. | +++ | ++++ | +++ | +++ | ++ | +++ | +++ |
| kat+hydroxy propyl. AMP-KS | +++ | ++++ | +++ | ++++ | +++ | ++++ | ++++ |
| ++++ besonders vorteilhaft + wenig vorteilhaft | | | | | | | |

Aus diesem Beispiel ist ersichtlich, daß im Vergleich zu anderen Stärken die Verwendung der Amylopektin-Kartoffelstärke und insbesondere der Amylopektin-Kartoffelstärkederivate als Cobinder in einer Standard-Streichrezeptur besonders vorteilhafte Eigenschaften bezüglich der Qualität des hergestellten Papiers bewirkt.

### Beispiel 7

In diesem Beispiel wird der Einfluß von verschiedenen Zusatzmitteln auf die Entwässerungsgeschwindigkeit von Papierstoff gezeigt. Die Bestimmung der Entwässerungsgeschwindigkeit erfolgte mit einem adaptierten Mahlgradprüfer (Fa. Lorentzen &Wettre). Die verkleisterte Stärke wird unter definierten Rührbedingungen in 11 verdünnten Papierstoff (Sulfatzellstoff + Holzschliff + Deinking; Konzentration: 3 g atro/l; pH = 7,1) eingebracht. Nach Einfüllen in den Mahlgradprüfer wird die Zeit gestoppt, die für die Bildung von 700 ml Filtrat notwendig ist. Die Entwässerungsgeschwindigkeit wird in ml/sec gerechnet. Die Ergebnisse werden prozentuell zum Kontrollversuch mit kationischer Kartoffelstärke angegeben.

| Stärke | DS kat | DS anionisch | Entwässerung |
|---|---|---|---|
| Kart.Stärke | 0,055 | 0,004 | 100% |
| AMP-Kart.St.A | 0,047 | 0,005 | 127% |
| AMP-Kart.St.B | 0,047 | 0,005 | 125% |
| AMP-Kart.St.C | 0,056 | 0,011 | 131% |
| AMP-Kart.St.D | 0,053 | 0,014 | 133% |

- AMP-Kart.St.A: kationisierte Amylopektin-Kartoffelstärke.
- AMP-Kart.St.B: kationisierte und propoxylierte Amylopektin-Kartoffelstärke (DSpropox: 0,021).
- AMP-Kart.St.C: kationisierte und mit Natriumtripolyphosphat phosphatierte Amylopektin-Kartoffelstärke.
- AMP-Kart.St.D: kationisierte und mit Natrium-3-Chloro-2-hydroxypropylsulfonat sulfonierte Amylopektin-Kartoffelstärke

## Patentansprüche

1. Leimungsmittelzusammensetzung für Papier, das auf wässeriger Basis formuliert ist und ein Alkylketendimer, bevorzugt ein C6-C30-Alkylketendimer, als cellulosereaktives Leimungsmittel, ein Dispergier- oder Emulgiermittel auf Basis kationisierter Stärke sowie in diesem Zusammenhang übliche Hilfs- und Zusatzmittel enthält, dadurch gekennzeichnet, daß die verwendete Stärke eine kationisierte und hydroxyalkylierte bzw. alkylveresterte Stärke, in welcher die Länge der Kohlenstoffkette der Hydroxyalkyl- bzw. Alkylestergruppe 1 bis 6 Kohlenstoffatome beträgt, mit einem Kationisierungsgrad von 0,005 bis 0,4 und einem Hydroxyalkylierungsgrad bzw. Alkylveresterungsgrad von 0,005 bis 0,75 ist.

2. Leimungsmittelzusammensetzung nach Anspruch 1, dadurch gekennzeichnet, daß die Stärke einen Kationisierungsgrad im Bereich von 0,015 bis 0,2 vorzugsweise bis 0,12, insbesondere von 0,035 bis 0,06, und einen Hydroxylierungsgrad bzw. Alkylveresterungsgrad im Bereich von 0,015 bis 0,2, vorzugsweise von 0,02 bis 0,1 aufweist.

3. Leimungsmittelzusammensetzung nach Anspruch 1 oder 2, dadurch gekennzeichnet, daß die Stärke eine kationisierte und hydroxyalkylierte bzw. alkylveresterte Amylopektin-stärke ist.

4. Leimungsmittelzusammensetzung nach einem der Ansprüche 1 bis 3, dadurch gekennzeichnet, daß die Stärke eine kationisierte und hydroxyalkylierte bzw. alkylveresterte Wachsmaisstärke ist.

5. Leimungsmittelzusammensetzung nach einem der Ansprüche 1 bis 4, dadurch gekennzeichnet, daß die Stärke eine kationisierte und gegebenenfalls hydroxyalkylierte bzw. alkylveresterte Amylopektin-Kartoffelstärke ist.

6. Leimungsmittelzusammensetzung nach einem der Ansprüche 1 bis 5, dadurch gekennzeichnet, daß die Amylopektinstärke einen Amylosegehalt von weniger als 20 %, vorzugsweise von 0 % bis 8 %, insbesondere von 0 % bis 3 % hat.

7. Leimungsmittelzusammensetzung nach einem der Ansprüche 1 bis 6, dadurch gekennzeichnet, daß die Stärke eine kationisierte propoxylierte Stärke ist.

8. Leimungsmittelzusammensetzung nach einem der Ansprüche 1 bis 3 und 5 bis 7, dadurch gekennzeichnet, daß die Stärke eine kationisierte und gegebenenfalls hydroxyalkylierte bzw. alkylveresterte Stärke ist, die aus durch molekularbiologische Methoden veränderten Kartoffeln gewonnen wurde.

9. Leimungsmittelzusammensetzung nach einem der Ansprüche 1 bis 3 und 5 bis 8, dadurch gekennzeichnet, daß die Stärke eine kationisierte und gegebenenfalls hydroxyalkylierte bzw. alkylveresterte Stärke ist, die aus gentechnisch veränderten Kartoffeln gewonnen wurde.

10. Leimungsmittelzusammensetzung nach einem der Ansprüche 1 bis 9, dadurch gekennzeichnet, daß die Stärke eine im Molekül kationisierte und hydroxyalkylierte bzw. alkylveresterte Stärke ist.

11. Leimungsmittelzusammensetzung nach einem der Ansprüche 1 bis 10, dadurch gekennzeichnet, daß die Stärke vernetzt ist und/oder als Stärke-Pfropfpolymerisat vorliegt.

12. Leimungsmittelzusammensetzung für Papier, das auf wässeriger Basis formuliert ist und Leimungssysteme auf Basis von
a) cyclischen Dicarbonsäureanhydriden der Formel 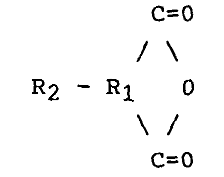 worin R₁ 2 oder 3 Kohlenstoffatome enthält und R₂ ein Kohlenwasserstoffrest mit 7 bis 30 Kohlenstoffatomen ist,
b) Säureanhydriden der Formel R₃-CO-O-CO-R₄, worin R₃ und R₄ gleiche oder verschiedene C₇-C₃₀-Kohlenwasserstoffreste sind,
c) Isocyanaten der Formel R₅-N=C=O, worin R₅ ein Kohlenwasserstoffrest mit 7 bis 30 Kohlenstoffatomen ist, als cellulosereaktives Leimungsmittel und/oder von
d)Polymerleimungsmitteln, insbesondere auf Basis von (Meth)acrylsäureester, Styrol, Acrylnitril,
ein Dispergier- oder Emulgiermittelmittel auf Basis kationisierter Stärke sowie in diesem Zusammenhang übliche Hilfs- und Zusatzmittel enthält, dadurch gekennzeichnet, daß die Stärke eine kationisierte und hydroxyalkylierte bzw. alkylveresterte Amylopektinstärke, in welcher die Länge der Kohlenstoffkette der Hydroxyalkyl- bzw. Alkylestergruppe 1 bis 6 Kohlenstoffatome beträgt, mit einem Kationisierungsgrad von 0,005 bis 0,4 und einem Hydroxyalkylierungsgrad bzw. Alkylveresterungsgrad von 0,005 bis 0,75 ist.

13. Leimungsmittelzusammensetzung nach Anspruch 12, dadurch gekennzeichnet, daß die Stärke einen Kationisierungsgrad im Bereich von 0,015 bis 0,2, vorzugsweise bis 0,12, insbesondere von 0,035 bis 0,06, und einen Hydroxyalkylierungsgrad bzw. Alkylveresterungsgrad im Bereich von 0,015 bis 0,2, vorzugsweise von 0,02 bis 0,1 aufweist.

14. Leimungsmittelzusammensetzung nach Anspruch 12 oder 13, dadurch gekennzeichnet, daß die Stärke eine kationisierte und hydroxyalkylierte bzw. alkylveresterte Wachsmaisstärke ist.

15. Leimungsmittelzusammensetzung nach Anspruch 12 oder 13, dadurch gekennzeichnet, daß die Stärke eine kationisierte und gegebenenfalls hydroxyalkylierte bzw. alkylveresterte Amylopektin-Kartoffelstärke ist.

16. Leimungsmittelzusammensetzung nach einem der Ansprüche 12 bis 15, dadurch gekennzeichnet, daß die Amylopektinstärke einen Amylosegehalt von weniger als 20 %, vorzugsweise von 0 % bis 8 %, insbesondere von 0 % bis 3 % hat.

17. Leimungsmittelzusammensetzung nach einem der Ansprüche 12 bis 16, dadurch gekennzeichnet, daß die Stärke eine kationisierte propoxylierte Amylopektinstärke ist.

18. Leimungsmittelzusammensetzung nach einem der Ansprüche 12, 13 und 15 bis 17, dadurch gekennzeichnet, daß die Stärke eine kationisierte und gegebenenfalls hydroxyalkylierte bzw. alkylveresterte Stärke ist, die aus durch molekularbiologische Methoden veränderten Kartoffeln gewonnen wurde.

19. Leimungsmittelzusammensetzung nach einem der Ansprüche 12, 13 und 15 bis 18, dadurch gekennzeichnet, daß die Stärke eine kationisierte und gegebenenfalls hydroxyalkylierte bzw. alkylveresterte Stärke ist, die aus gentechnisch veränderten Kartoffeln gewonnen wurde.

20. Leimungsmittelzusammensetzung nach einem der Ansprüche 12 bis 19, dadurch gekennzeichnet, daß die Stärke eine im Molekül kationisierte und hydroxyalkylierte bzw. alkylveresterte Stärke ist.

21. Leimungsmittelzusammensetzung nach einem der Ansprüche 1 bis 20, insbesondere nach einem der Ansprüche 3 bis 20, dadurch gekennzeichnet, daß die Stärke abgebaut und/oder vernetzt ist und/oder als Stärke-Pfropfpolymerisat vorliegt.

22. Leimungsmittel nach Anspruch 21, dadurch gekennzeichnet, daß die Stärke durch Säure, Oxidation, enzymatisch, thermisch, thermochemisch oder durch eine Kombination dieser Maßnahmen abgebaut wurde.

23. Mittel zur Oberflächenleimung von Papier, das ein Bindemittel auf der Basis von kationisierter Stärke sowie gegebenenfalls in diesem Zusammenhang bekannte Bestandteile enthält, dadurch gekennzeichnet, daß die verwendete Stärke eine kationisierte und hydroxyalkylierte bzw. alkylveresterte Stärke, in welcher die Länge der Kohlenstoffkette der Hydroxyalkyl- bzw. Alkylestergruppe 1 bis 6 Kohlenstoffatome beträgt, mit einem Kationisierungsgrad von 0,005 bis 0,4 und einem Hydroxyalkylierungsgrad bzw. Alkylveresterungsgrad von 0,005 bis 0,75 ist.

24. Mittel nach Anspruch 23, dadurch gekennzeichnet, daß die Stärke einen Kationisierungsgrad im Bereich von 0,015 bis 0,2, vorzugsweise bis 0,12, insbesondere von 0,035 bis 0,06, und einen Hydroxylierungsgrad bzw. Alkylveresterungsgrad im Bereich von 0,015 bis 0,2, vorzugsweise von 0,02 bis 0,1 aufweist.

25. Mittel nach Anspruch 23 oder 24, dadurch gekennzeichnet, daß die Stärke eine kationisierte und hydroxyalkylierte bzw. alkylveresterte Amylopektinstärke ist.

26. Mittel nach einem der Ansprüche 23 bis 25, dadurch gekennzeichnet, daß die Stärke eine kationisierte und hydroxyalkylierte bzw. alkylveresterte Wachsmaisstärke ist.

27. Mittel nach einem der Ansprüche 23 bis 25, dadurch gekennzeichnet, daß die Stärke eine kationisierte Amylopektin-Kartoffelstärke ist.

28. Mittel nach einem der Ansprüche 23 bis 25, dadurch gekennzeichnet, daß die Stärke eine hydroxyalkylierte Amylopektin-Kartoffelstärke ist.

29. Mittel nach einem der Ansprüche 23 bis 25, dadurch gekennzeichnet, daß die Stärke eine alkylveresterte Amylopektin-Kartoffelstärke ist.

30. Mittel nach einem der Ansprüche 23 bis 25, dadurch gekennzeichnet, daß die Stärke eine kationisierte und hydroxyalkylierte Amylopektin-Kartoffelstärke ist.

31. Mittel nach einem der Ansprüche 23 bis 25, dadurch gekennzeichnet, daß die Stärke eine kationisierte und alkylveresterte Amylopektin-Kartoffelstärke ist.

32. Mittel nach einem der Ansprüche 23 bis 31, dadurch gekennzeichnet, daß die Amylopektinstärke einen Amylosegehalt von weniger als 20 %, vorzugsweise von 0 % bis 8 %, insbesondere von 0 % bis 3 % hat.

33. Mittel nach Anspruch 30 oder 32, dadurch gekennzeichnet, daß die Stärke eine kationisierte propoxylierte Stärke ist.

34. Mittel nach einem der Ansprüche 23 bis 25 und 27 bis 33, dadurch gekennzeichnet, daß die Stärke eine kationisierte und/oder hydroxyalkylierte bzw. alkylveresterte Stärke ist, die aus durch molekularbiologische Methoden veränderten Kartoffeln gewonnen wurde.

35. Mittel nach einem der Ansprüche 23 bis 25 und 27 bis 34, dadurch gekennzeichnet, daß die Stärke eine kationisierte und/oder hydroxyalkylierte bzw. alkylveresterte Stärke ist, die aus gentechnisch veränderten Kartoffeln gewonnen wurde.

36. Mittel nach einem der Ansprüche 23 bis 35, dadurch gekennzeichnet, daß die Stärke eine im Molekül kationisierte und hydroxyalkylierte bzw. alkylveresterte Stärke ist.

37. Mittel nach einem der Ansprüche 23 bis 36, dadurch gekennzeichnet, daß die Stärke depolymerisiert und/oder vernetzt ist und/oder als Stärke-Pfropfpolymerisat vorliegt.

38. Mittel nach Anspruch 37, dadurch gekennzeichnet, daß die Stärke durch Säure, Oxidation, enzymatisch, thermisch, thermochemisch oder durch eine Kombination dieser Maßnahmen abgebaut wurde.

39. Beschichtungsmittel für Papier, das insbesondere als Mittel zum Streichen von Papier verwendbar ist, welches ein Bindemittel auf der Basis von Stärke sowie gegebenenfalls in diesem Zusammenhang bekannte Bestandteile enthält, dadurch gekennzeichnet, daß die Stärke aus einer Amylopektin-Kartoffelstärke besteht.

40. Beschichtungsmittel nach Anspruch 39, dadurch gekennzeichnet, daß die Kartoffelstärke einen Amylosegehalt von weniger als 20 %, vorzugsweise von 0 % bis 8 % und insbesondere von 0 % bis 3 % hat.

41. Beschichtungsmittel nach Anspruch 39 oder 40, dadurch gekennzeichnet, daß die Stärke eine solche ist, die aus durch molekularbiologische Methoden veränderten Kartoffeln gewonnen wurde.

42. Beschichtungsmittel nach einem der Ansprüche 39 bis 41, dadurch gekennzeichnet, daß die Stärke eine solche ist, die aus durch gentechnische Methoden veränderten Kartoffeln gewonnen wurde.

43. Beschichtungsmittel nach einem der Ansprüche 39 bis 42, dadurch gekennzeichnet, daß die Stärke in abgebauter und/oder vernetzter und/oder derivatisierter Form vorliegt.

44. Beschichtungsmittel nach Anspruch 43, dadurch gekennzeichnet, daß die Stärke durch Säure, Oxidation, enzymatisch, thermisch, thermochemisch oder durch eine Kombination dieser Maßnahmen abgebaut wurde.

45. Beschichtungsmittel nach Anspruch 43, dadurch gekennzeichnet, daß die Stärke Esterund/oder Ethergruppen trägt.

46. Beschichtungsmittel nach einem der Ansprüche 39 bis 45, dadurch gekennzeichnet, daß die Stärke als Diethylaminoethyl-, Hydroxypropyltrimethylammoniumsalz, Hydroxyethyl-, Hydroxypropyl-, Hydroxypropylsulfonat-, Hydroxybutyl-, Hydroxypentyl-, Hydroxyhexyl-, Carboxymethyl-, Cyanoethyl-, Carbamoylethylether oder Formyl-, Acetyl-, Propionyl-, Butyryl-, Succinyl-, Octenylsuccinyl-, Sulfonyl-, Sulfat-, Phosphat-, Carbamidester oder als Gemisch hievon vorliegt.

47. Beschichtungsmittel nach einem der Ansprüche 39 bis 46, dadurch gekennzeichnet, daß die Stärke als eine kationisierte und/oder hydroxyalkylierte bzw. alkylveresterte Stärke, in welcher die Länge der Kohlenstoffkette der Hydroxyalkyl- bzw. Alkylestergruppe 1 bis 6 Kohlenstoffatome beträgt, vorzugsweise als kationisierte propoxylierte Stärke, vorliegt.

48. Beschichtungsmittel nach einem der Ansprüche 39 bis 47, dadurch gekennzeichnet, daß die Stärke als Stärke-Pfropfpolymer, vorzugsweise mit Acrylverbindungen, wie z.B. Acrylamid, Methylmethacrylat, Ethylacrylat, Acrylnitril, oder Vinylverbindungen, wie Vinylacetat oder Styrol, oder Butadien oder Mischungen hievon vorliegt.

49. Beschichtungsmittel nach einem der Ansprüche 39 bis 48, das zusätzlich zur nativen, abgebauten und/oder derivatisierten Amylopektin-Kartoffelstärke native, abgebaute oder derivatisierte Stärken aus anderen pflanzlichen Quellen, Cellulose oder Cellulosederivate, andere Hydrokolloide oder deren Derivate, Proteine oder deren Derivate, synthetische Binder oder Cobinder, natürliche oder synthetische Hilfsmittel, Pigmente, Füllstoffe und weitere für diesen Zweck bekannte Zusatzmittel oder Gemische hievon enthält.

50. Beschichtungsmittel nach einem der Ansprüche 39 bis 49 zur Verwendung als Leimungsmittel, papierfestigendes Mittel, Oberflächenpigmentierungsmittel, Streichfarbe, filmbildendes Mittel oder Mittel zur Unterbindung des Staubens.

51. Zusatzmittel auf Basis von kationisierter Stärke zu Papierstoffbei der Herstellung von Papier, welches gegebenenfalls in diesem Zusammenhang übliche Hilfsmittel und Bestandteile enthält, dadurch gekennzeichnet, daß die verwendete Stärke eine kationisierte und hydroxyalkylierte bzw. alkylveresterte Stärke, in welcher die Länge der Kohlenstoffkette der Hydroxyalkyl- bzw. Alkylestergruppe 1 bis 6 Kohlenstoffatome beträgt, mit einem Kationisierungsgrad von 0,005 bis 0,4 und einem Hydroxyalkylierungsgrad bzw. Alkylveresterungsgrad von 0,005 bis 0,75 ist.

52. Zusatzmittel nach Anspruch 51, dadurch gekennzeichnet, daß die Stärke einen Kationisierungsgrad im Bereich von 0,015 bis 0,2, vorzugsweise bis 0,12, insbesondere von 0,035 bis 0,06, und einen Hydroxylierungsgrad bzw. Alkylveresterungsgrad im Bereich von 0,015 bis 0,2, vorzugsweise von 0,02 bis 0,1 aufweist.

53. Zusatzmittel nach Anspruch 51 oder 52, dadurch gekennzeichnet, daß die Stärke eine kationisierte und hydroxyalkylierte bzw. alkylveresterte Amylopektinstärke ist.

54. Zusatzmittel nach einem der Ansprüche 51 bis 53, dadurch gekennzeichnet, daß die Stärke eine kationisierte und hydroxyalkylierte bzw. alkylveresterte Wachsmaisstärke ist.

55. Zusatzmittel nach einem der Ansprüche 51 bis 53, dadurch gekennzeichnet, daß die Stärke eine kationisierte und/oder hydroxyalkylierte bzw. alkylveresterte Amylopektin-Kartoffelstärke ist.

56. Zusatzmittel nach einem der Ansprüche 51 bis 55, dadurch gekennzeichnet, daß die Amylopektinstärke einen Amylosegehalt von weniger als 20 %, vorzugsweise von 0 % bis 8 %, insbesondere von 0 % bis 3 % hat.

57. Zusatzmittel nach einem der Ansprüche 51 bis 56, dadurch gekennzeichnet, daß die Stärke eine kationisierte propoxylierte Stärke ist.

58. Zusatzmittel nach einem der Ansprüche 51 bis 53 und 55 bis 57, dadurch gekennzeichnet, daß die Stärke eine kationisierte und/oder hydroxyalkylierte bzw. alkylveresterte Stärke ist, die aus durch molekularbiologische Methoden veränderten Kartoffeln gewonnen wurde.

59. Zusatzmittel nach einem der Ansprüche 51 bis 53 und 55 bis 58, dadurch gekennzeichnet, daß die Stärke eine kationisierte und/oder hydroxyalkylierte bzw. alkylveresterte Stärke ist, die aus gentechnisch veränderten Kartoffeln gewonnen wurde.

60. Zusatzmittel nach einem der Ansprüche 51 bis 59, dadurch gekennzeichnet, daß die Stärke eine im Molekül kationisierte und hydroxyalkylierte bzw. alkylveresterte Stärke ist.

61. Zusatzmittel auf Basis von Stärke zu Papierstoff bei der Herstellung von Papier, welches gegebenenfalls in diesem Zusammenhang übliche Hilfsmittel und Bestandteile enthält, dadurch gekennzeichnet, daß die Stärke eine amphotere Amylopektin-Kartoffelstärke mit einem Kationisierungsgrad (DS) von 0 bis 0,4, bevorzugt von 0,001 bis 0,2, insbesondere von 0,005 bis 0,1 und einem Anionisierungsgrad (DS) von 0 bis 0,4, bevorzugt von 0,005 bis 0,2, insbesondere von 0,008 bis 0,1 ist.

62. Zusatzmittel nach Anspruch 61, dadurch gekennzeichnet, daß die Amylopektinstärke einen Amylosegehalt von weniger als 20 %, vorzugsweise von 0 % bis 8 %, insbesondere von 0 % bis 3 % hat.

63. Zusatzmittel nach Anspruch 61 oder 62, dadurch gekennzeichnet, daß die Amylopektin-Stärke aus durch molekularbiologische Methoden veränderten Kartoffeln gewonnen wurde.

64. Zusatzmittel nach Anspruch 63, dadurch gekennzeichnet, daß die Amylopektin-Stärke aus gentechnisch veränderten Kartoffeln gewonnen wurde.

65. Zusatzmittel nach einem der Ansprüche 51 bis 64, dadurch gekennzeichnet, daß die Stärke depolymerisiert und/oder vernetzt ist und/oder als Stärke-Pfropfpolymerisat vorliegt.

66. Zusatzmittel nach Anspruch 65, dadurch gekennzeichnet, daß die Stärke durch Säure, Oxidation, enzymatisch, thermisch, thermochemisch oder durch eine Kombination dieser Maßnahmen abgebaut wurde.

67. Kationisierte und hydroxyalkylierte bzw. alkylveresterte Amylopektinstärke, in welcher die Länge der Kohlenstoffkette der Hydroxyalkyl- bzw. Alkylestergruppe 1 bis 6 Kohlenstoffatome beträgt, mit einem Kationisierungsgrad von 0,005 bis 0,4 und einem Hydroxyalkylierungsgrad bzw. Alkylveresterungsgrad von 0,005 bis 0,75.

68. Kationisierte und hydroxyalkylierte bzw. alkylveresterte Amylopektinstärke nach Anspruch 67, gekennzeichnet durch einen Kationisierungsgrad im Bereich von 0,015 bis 0,2, vorzugsweise bis 0,12, insbesondere von 0,035 bis 0,06, und einen Hydroxylierungsgrad bzw. Alkylveresterungsgrad im Bereich von 0,015 bis 0,2, vorzugsweise von 0,02 bis 0,1.

69. Kationisierte und hydroxyalkylierte bzw. alkylveresterte Wachsmaisstärke nach Anspruch 67 oder 68.

70. Kationisierte und/oder hydroxyalkylierte bzw. alkylveresterte Amylopektin-Kartoffelstärke mit dem in den Ansprüchen 67 oder 68 angegebenem Kationisierungs- bzw. Hydroxyalkylierungs- bzw. Alkylveresterungsgrad.

71. Kationisierte propoxylierte Amylopektinstärke nach einem der Ansprüche 67 bis 70.

72. Amphotere Amylopektin-Kartoffelstärke mit einem Kationisierungsgrad (DS) von 0,001 bis 0,4, bevorzugt von 0,001 bis 0,2, insbesondere von 0,005 bis 0,1 und einem Anionisierungsgrad (DS) von 0,005 bis 0,4, bevorzugt von 0,005 bis 0,2, insbesondere von 0,008 bis 0,1.

73. Verwendung von kationisierter und/oder hydroxyalkylierter bzw. alkylveresterter Amylopektinstärke nach einem der Ansprüche 67 bis 71 in der Papierherstellung.

74. Verwendung von amphoterer Amylopektin-Kartoffelstärke nach Anspruch 72, gegebenenfalls in Kombination mit üblichen Hilfsmitteln und Bestandteilen, als Zusatzmittel zu Papierstoff bei der Herstellung von Papier.

75. Verfahren zur Herstellung von Papier bzw. oberflächenbehandeltem Papier, gekennzeichnet durch die Verwendung eines Mittels nach einem der Ansprüche 1 bis 66.

76. Papier, das mit einem Mittel nach einem der Ansprüche 1 bis 66 hergestellt wurde.
